(19) **Europäisches Patentamt**

**European Patent Office**

**Office européen des brevets**

(11) **EP 1 696 201 A1**

(12) **EUROPÄISCHE PATENTANMELDUNG**

(43) Veröffentlichungstag:
**30.08.2006 Patentblatt 2006/35**

(51) Int Cl.:
***G01B 9/02*** *(2006.01)*

(21) Anmeldenummer: 05101373.8

(22) Anmeldetag: **23.02.2005**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(71) Anmelder: **Leica Geosystems AG**
**9435 Heerbrugg (CH)**

(72) Erfinder:
• **Rohner, Marcel**
  **9410 Heiden (CH)**
• **Jensen, Thomas**
  **9400 Rorschach (CH)**

(74) Vertreter: **Büchel, Kaminski & Partner**
**Patentanwälte Est.**
**Austrasse 79**
**9490 Vaduz (LI)**

(54) **Phasenrauschkompensation für interferometrische Absolutdistanzmesser**

(57)     In einem Distanzmessverfahren mit Aussenden frequenzmodulierter elektromagnetischer Strahlung auf wenigstens ein zu vermessendes Ziel und nachfolgendem Empfang unter heterodynem Mischen der vom Ziel zurückgestreuten Strahlung wird die Strahlung parallel über eine interferometrische Referenzlänge geführt. Dabei erfolgt beim Empfangen die Erzeugung eines ersten digitalisierten Interferogramms der vom Ziel zurückgestreuten Strahlung und eines zweiten digitalisierten Interferogramms der über die Referenzlänge geführten Strahlung.

Fig. 5

**Beschreibung**

Die Erfindung betrifft ein Absolut-Distanzmessverfahren nach dem Oberbegriff des Anspruchs 1, eine Absolut-Distanzmessvorrichtung nach dem Oberbegriff des Anspruchs 14 und ein Computerprogrammprodukt.

Im Bereich der elektronischen Distanzmessung sind verschiedene Prinzipien und Verfahren bekannt. Ein Ansatz besteht darin, frequenzmodulierte elektromagnetische Strahlung, wie z.B. Licht, auf das zu vermessende Ziel auszusenden und nachfolgend ein oder mehrere Echos von rückstreuenden Objekten, idealerweise ausschliesslich vom zu vermessenden Ziel, zu empfangen, wobei das zu vermessende Ziel sowohl spiegelnde - beispielsweise Retroreflektoren - als auch diffuse Rückstreucharakteristik aufweisen kann. In einer Heterodyn-Interferometer-Anordnung wird eine durchstimmbare Laserlichtquelle zur Absolutdistanzmessung verwendet. In der prinzipiell einfachsten Ausführungsform erfolgt dabei das Durchstimmen der optischen Frequenz der Laserquelle linear. Das empfangene Signal wird mit einem zweiten Signal, welches vom emittierten Lichtsignal abgeleitet wird, überlagert. Die entstehende Schwebungsfrequenz des heterodynen Mischprodukts, dem Interferogramm, ist ein Mass für die Distanz zum Zielobjekt.

Die Wellenlänge des emittierten Lichtsignals stellt den Massstab der Messung dar. Dieser ist im allgemeinen nicht bekannt und muss daher in einer zusätzlichen Messung bestimmt werden. Hierzu wird beispielsweise ein Teil des emittierten Lichts über ein Referenzinterferometer mit definierter Referenzlänge geführt. Aus dem entstehenden Schwebungsprodukt kann auf Grund der bekannten Referenzlänge auf die zeitliche Wellenlängenänderung des emittierten Lichtsignals geschlossen werden.

Die zur Umsetzung dieser Verfahren verwendeten Vorrichtungen nutzen üblicherweise einen Laser als Signalquelle, welcher durch Modulation der externen (beispielsweise Bragg-Grating) oder internen Kavität (beispielsweise Distributed Feedback (DFB) oder Distributed Bragg Reflector (DBR)) gechirpt werden kann. Zur Emission und zum Empfang kommen im optischen Bereich Sende- und Empfangsoptiken zum Einsatz, denen ein Detektor oder Quadraturdetektor zur Heterodynmischung, A/D-Wandler und digitalem Signal-Prozessor nachgeschaltet ist.

In der praktischen Ausführung bestehen zumeist mehrere grundsätzliche Schwierigkeiten:

- Eine für die gewünschte Genauigkeit ausreichend lineare Durchstimmung der Laserlichtquelle lässt sich nur mit grossem Aufwand bewerkstelligen.

- Die Laserlichtquellen, insbesondere Halbleiterlaserdioden, weisen ein starkes Phasenrauschen auf, was gleichbedeutend mit unkontrollierten Schwankungen der Massstabslänge ist, welches einerseits den Messbereich stark einschränkt, d.h. Messungen auf Distanzen unterhalb der Kohärenzlänge des Lasers beschränkt, und andererseits starke Messfluktuationen verursacht, welche nur durch lange Messzeiten zu reduzieren sind.

- Während des Messvorgangs stattfindende Bewegungen des zu vermessenden Ziels als auch Fluktuationen des Messweges verursachen zusätzliche Frequenzanteile im interferometrischen Mischprodukt, welche zu grossen Messfehlern führen können.

Aus dem Stand der Technik sind verschiedene Ansätze bekannt, die sich mit der hiermit verbundenen Problematik beschäftigen.

In der US 4,830,486 wird ein gattungsgemässes System zur absoluten Distanzmessung beschrieben. Dabei erfolgt eine Linearisierung des Frequenzverlaufs durch regeltechnische Massnahmen und eine Phasenrauschunterdrückung durch Wahl der Armlänge des Interferometers annähernd in Übereinstimmung mit der Zieldistanz. Bewegungen des zu vermessenden Ziels während des Messvorgangs können durch geeignete Wahl des Frequenzverlaufs diskriminiert werden. Das System erlaubt es, Ziele mit sehr geringer Reflektivität zu messen, benötigt aber für die erforderliche hohe Messgenauigkeit lange Messzeiten. Zudem führt das Erfordernis einer Armlänge des Referenzinterferometers in der Grössenordnung der zu vermessenden Strecke zu erhöhter Komplexität bzw. technischem Aufwand und hohen Herstellungskosten.

Die DE 195 22 262 beschreibt ein System mit zwei Laserquellen zur Herstellung synthetischer Wellenlängen. Damit sind zwar geringere Anforderungen an die interferometrische Stabilität des Aufbaus und der Zieldistanz verbunden, jedoch weist das System aufgrund der zwei Laserquellen eine erhöhte Komplexität auf.

In der US 2003/0107743 A1 wird ein Verfahren zur Eliminierung von Phasenrauschen der Signalquelle beschrieben. Das Verfahren dient zur Vermessung der Gruppenlaufzeit von optischen Komponenten mit großer optischer Länge. Es ist in der beschriebenen Form nicht zur Vermessung absoluter Distanzen geeignet.

Eine Aufgabe der Erfindung besteht darin, eine Lösung bereitzustellen, die für gattungsgemässe Absolutdistanzmesser eine verbesserte Identifizierung und Kenntnis des Frequenzverlaufs und/oder eine Verringerung bzw. Vermeidung der Fehler oder deren Auswirkungen erlaubt. Insbesondere soll die Durchstimmcharakteristik und das Phasenrauschen des emittierten Laserlichts in einem Referenzinterferometer charakterisiert werden, so dass insbesondere Nichtlinearität und Rauschen algorithmisch berücksichtigt und deren Einfluss auf die Messgenauigkeit eliminiert werden können.

Eine weitere Aufgabe der vorliegenden Erfindung ist es, auch interferometrische Messungen jenseits der Kohärenzlänge zur ermöglichen.

Diese Aufgaben werden durch die Gegenstände des Anspruchs 1 bzw. 14 oder der abhängigen Ansprüche gelöst bzw. die Lösungen weitergebildet.

Erfindungsgemäss wird der Phasenverlauf der Signalquelle in einem Referenzinterferometer bestimmt. Die ermittelten Phasenverlaufsdaten werden danach benutzt, um den Einfluss der Nichtidealitäten der Laserquelle praktisch zu eliminieren.

Für einen gegebenen Frequenzverlauf des emittierten Laserlichts $\nu(t)$, ist der Phasenverlauf des Heterodynsignals des Referenzinterferometers mit einer Länge (Differenz der Armlängen) von $R_r = c \cdot \tau_r / 2$ gegeben durch

$$\Delta\phi_r\left(t_k\right) = 2\pi \cdot \int_{t_k-\tau_r}^{t_k} \nu\left(t\right) dt \qquad (1)$$

In einer idealen Ausführungsform wird dieses Phasenverlaufssignal zu den Abtastzeitpunkten $t_k$ abgetastet und digitalisiert, wobei

$$t_k = \alpha \cdot k \cdot \tau_r \qquad (2)$$

ist und der Korrekturfaktor $\alpha \approx 1$ die Abweichung zwischen Abtastintervall und Verzögerungszeit der Referenzlänge modelliert. Das heisst, das Abtastintervall entspricht idealerweise gerade der bekannten Verzögerungszeit der Referenzlänge $\tau_r$. Erfindungsgemäss kann es vorteilhaft sein, die Abtastfrequenz als ganzzahliges Vielfaches der inversen Verzögerungszeit über die Referenzlänge zu wählen.

Der Phasenverlauf des Heterodynsignals der Messstrecke von der Länge (Differenz der Armlängen) $R = c \cdot \tau_m / 2$ ist gegeben durch

$$\Delta\phi_M\left(t_k\right) = 2\pi \cdot \int_{t_k-\tau_m}^{t_k} \nu\left(t\right) dt \qquad (3)$$

Gemäss den Verfahren des Stands der Technik, wird für ein ruhendes Zielobjekt die Distanz zum Zielobjekt R durch Auflösen folgender Relation erhalten

$$\frac{R}{R_r} \approx \frac{\Delta\phi_M\left(t\right)}{\Delta\phi_r\left(t\right)} \qquad (4)$$

Die Auswertung von Gleichung (4) kann entweder zu einem gegebenen Zeitpunkt T - dem Ende des Messintervalls - erfolgen, oder als Optimierungsproblem formuliert werden.

Im strengen Sinne gilt diese Beziehung (4) nur, falls eine der folgenden Bedingungen erfüllt ist:

- Linearität des optischen Frequenzverlaufs: Diese Bedingung ist sowohl auf Grund der Durchstimmung der Frequenzen als auch auf Grund des Phasenrauschens nicht exakt erfüllbar.

- Die Zieldistanz $R$ stimmt mit der Referenzlänge überein: $R = R_r$.

Gemäss Stand der Technik bedeutet letzteres, dass zu jeder gewünschten Zieldistanz ein Referenzinterferometer mit entsprechender Länge verfügbar sein müsste. Dies ist offensichtlich praktisch nur in Spezialfällen gegeben bzw. nur mit grossen Aufwand zu erreichen.

Im Gegensatz zu Gleichung (4) wird erfindungsgemäss aus der Messung der Phasenverlaufsdaten eines Referenzinterferometers (mit einer im Verhältnis zur Kohärenzlänge des emittierten Laserlichts kurzen Länge) ein zum Messinterferometer (mit beliebiger Zieldistanz) äquivalenter Phasenverlauf synthetisch erzeugt. In der einfachsten Ausführungsform wird hierzu

$$\Delta\phi_{m\cdot r}\left(t_k\right) = \alpha \cdot \sum_{j=k-m+1}^{k} \Delta\phi_r\left(t_j\right) \qquad (5)$$

gebildet, wobei $R \approx m \cdot \alpha \cdot R_r$ gilt, wie für die Gültigkeit der Beziehung (4) gefordert.

Die Beziehung (4) schreibt sich nun als

$$\frac{R}{m \cdot \alpha \cdot R_r} \approx \frac{\Delta\phi_M\left(t\right)}{\Delta\phi_{m\cdot r}\left(t\right)} \qquad (6)$$

und wird mit grosser Genauigkeit für beliebigen Verlauf der Durchstimmung der Laserfrequenz und Phasenrauschen erfüllt. Ein Einsetzen von Gleichung (5) in Gleichung (6) zeigt zudem, dass der Korrekturfaktor $\alpha$ eliminiert werden kann. Den unbekannten Parameter $m$, der das Längenverhältnis zwischen Referenz- und Messinterferometer ausdrückt, gilt es in der Analyse der Messdaten zu bestimmen.

Die Messgenauigkeit der Anordnung kann weiter erhöht werden, indem Gleichung (5) durch eine Interpolationsformel der folgenden Art ersetzt wird

$$\Delta\phi_{m\cdot r}\left(t_k\right) = \alpha \cdot \left[ \sum_{j=k-m+1}^{k} \Delta\phi_r\left(t_j\right) + \frac{R - m \cdot \alpha \cdot R_r}{\alpha \cdot R_r} \Delta\phi_r\left(t_{k-m}\right) \right] \qquad (7)$$

wobei nun $m$ derart gewählt wird, dass $(m\text{-}1)\cdot\alpha\cdot R_r \leq R \leq m\cdot\alpha\cdot R_r$ gilt.

Es ist erfindungsgemäss möglich, Messungen ausserhalb der Kohärenzlänge des Lasers durchzuführen. In diesem Fall degeneriert der Phasenverlauf auf der Messstrecke zu einem Rauschprozess. Die Bildung des synthetischen Phasenverlaufs einer virtuellen Messstrecke erzeugt nun einen korrelierten Rauschprozess. Die Zieldistanz wird durch die numerische Suche nach einem Korrelationsmaximum bestimmt.

Zur Auswertung der Phasenverlaufsdaten wird das Auflösen der Beziehung (6) vorteilhafterweise durch ein Optimierungsproblem der folgenden Art ersetzt

$$\min_{\tilde{R}} \left[ \frac{\tilde{R}}{m \cdot \alpha \cdot R_r} \Delta\phi_{m\cdot r}\left(t\right) - \Delta\phi_M\left(t\right) \right]^2 \qquad (8)$$

Erfindungsgemäss kann diese Optimierung zur Systemvereinfachung auch approximativ erfolgen.

Die Beziehungen (6) und (8) setzen voraus, dass sowohl der Phasenverlauf des Referenzinterferogramms als auch derjenige des Messinterferometers bestimmbar ist. Im Allgemeinen gilt dies für die Referenzmessung. Die Messungen auf der Messstrecke sind allerdings oft so stark verrauscht, dass die Phase nicht aus der Messung des Heterodyn-Signals $s(t) \approx A \cdot \cos(\Delta\phi_M(t))$ bestimmbar ist. In diesem Falle, wird zur Bestimmung der Zieldistanz ein Optimierungsproblem direkt auf den gemessenen Signalamplituden des Interferogramms - statt auf den abgeleiteten Phasen - gelöst

$$\min_{\tilde{A},\tilde{R}} \left[ \tilde{A} \cdot \cos\left( \frac{\tilde{R}}{m \cdot \alpha \cdot R_r} \Delta\phi_{m\cdot r}\left(t\right) \right) - s\left(t\right) \right]^2 \qquad (9)$$

Erfindungsgemäss kann auch diese Optimierung zur Systemvereinfachung approximativ erfolgen.

Bei Bewegung des Messobjektes mit der Geschwindigkeit V in Messrichtung ist der Phasenverlauf des Heterodynsignals des Messinterferometers von der Länge R gegeben durch

$$\Delta\phi_M\left(t_k\right) = 2\pi \cdot \left[\int_{t_k-\tau_m}^{t_k} v(t)\,dt + \frac{V \cdot t}{\lambda}\right] \qquad (10)$$

Dieses führt bei Nichtberücksichtigung der Bewegung in der Messdatenanalyse zu einer fehlerhaften Distanzbestimmung (Doppler-Effekt). Erfindungsgemäß wird die Bewegung des Messobjektes durch Einführung eines Bewegungsmodells $V(t;\theta)$ mit zu bestimmenden Geschwindigkeitsparametern $\theta$ im Optimierungsproblem der Phasenverlaufsdaten der folgenden Art berücksichtigt

$$\min_{\tilde{R},\tilde{\theta}} \left[\frac{\tilde{R}}{m \cdot \alpha \cdot R_r}\Delta\phi_{m\cdot r}(t) - \Delta\phi_M(t) + 2\pi\frac{V\left(t;\tilde{\theta}\right)\cdot t}{\lambda}\right]^2 \qquad (11)$$

Bei stark verrauschten Signalen wird zur Bestimmung der Zieldistanz ein Optimierungsproblem direkt auf den gemessenen Signalamplituden des Interferogramms - statt auf den abgeleiteten Phasen - gelöst

$$\min_{\tilde{A},\tilde{R},\tilde{\theta}} \left[\tilde{A} \cdot \cos\left(\frac{\tilde{R}}{m \cdot \alpha \cdot R_r}\Delta\phi_{m\cdot r}(t) + 2\pi\frac{V\left(t;\tilde{\theta}\right)\cdot t}{\lambda}\right) - s(t)\right]^2 \qquad (12)$$

Erfindungsgemäss können auch andere Bewegungsmodelle verwendet werden. Erfindungsgemäss kann diese Optimierung zur Systemvereinfachung auch approximativ erfolgen. Bei bekanntermassen interferometrisch stabilen Verhältnissen kann auf die Bestimmung des Geschwindigkeitsparameters verzichtet werden.

Die Approximation kann mit verschiedenen Ansätzen erfolgen. Insbesondere kann ein vereinfachtes Bewegungsmodell konstanter Geschwindigkeit $\theta=v$, mit $V(t;\theta)=v$ verwendet werden. Ebenso kann die Bestimmung des ganzzahligen Verhältnisses $m$ und der zu bestimmenden Distanz $R$ sequentiell stattfinden oder es kann auf die Bestimmung der zeitlichen Variation des emittierten Laserlichts $\gamma(t)$ verzichtet werden. Zur Vermeidung der $2\pi$-Ambiguität bei der Bestimmung der Phase der Interferogramme kann statt einer Optimierung auf den Phasenverlaufsdaten gemäss Gleichungen (8) und (11) auch eine Optimierung auf den Differenzphasen $\Delta\phi_M(t_k)-\Delta\phi_M(t_{k-1})$ und $\Delta\phi_{m\cdot r}(t_k)-\Delta\phi_{m\cdot r}(t_{k-1})$ erfolgen. Bei stark verrauschten Interferogrammen kann das Optimieren auf den Signalamplituden des Interferogramms gemäss Gleichung (12) durch geeignete Filterung auf eine Optimierung auf den Phasenverlaufsdaten gemäss Gleichung (11) reduziert werden.

Sowohl die Länge des Referenzinterferometers, als auch das Abtastintervall der Digitalisierung bestimmen die relative Messgenauigkeit des Distanzmessers. Während elektronische Oszillatoren mit ppm-Genauigkeit erhältlich sind, stellt die Stabilisierung der Referenzlänge ein grosses Problem dar.

Erfindungsgemäss kann das Problem gelöst werden, indem die Referenzlänge durch konstruktive Massnahmen stabilisiert, oder mit einem inhärent temperaturstabilen oder temperaturstabilisierten Element, wie beispielsweise einer Gaszelle oder einem temperaturstabilisierten Etalon, kalibriert wird. Hierzu werden simultan mit der Messung des Phasenverlaufs des Referenzinterferometers während der Durchstimmung der Laserfrequenz, die Transmissionsextrema durch das besagte Element bestimmt. Die Frequenzseparation $\Delta v$ dieser Extrema ist durch den Aufbau des Elements sehr genau bestimmt. Die totale Phasenänderung des Referenzstreckenphasenverlaufs während des Durchgangs $t_1$, $t_2$ der Transmissionsextrema, $\Delta\Phi=\Delta\phi_r(t_2)-\Delta\phi_r(t_1)$, ist nun ein Mass für die Referenzlänge

$$R_r = \frac{\Delta\Phi \cdot c}{4\pi \cdot \Delta v} \qquad (13)$$

Diese Messung kann simultan oder sequentiell mit der Messung zum Zielobjekt durchgeführt werden. Für eine simultane Messung, kann die Messgenauigkeit - unter Annahme langsamer Fluktuationen der Referenzlänge - durch Filterung verbessert werden. Dadurch kann der Einfluss des Phasenrauschens auf die Kalibrierung der Referenzlänge ohne weitere Massnahmen stark unterdrückt werden.

Durch den erfindungsgemässen Ansatz können nun gegenüber dem Stand der Technik geringere Anforderungen an die Linearität der Frequenzdurchstimmung wie auch an die Linienbreite der verwendeten Laserquelle gestellt werden. Zudem wird der Messbereich nicht durch die Laserkohärenzlänge limitiert und die Messgenauigkeit kann auch bei hohen Messraten aufrecht erhalten werden. Somit folgt die Verwendbarkeit einer einfach realisierbaren, kostengünstigen Laserquelle mit entsprechendem Kostenvorteil des Gesamtsystems bei hoher Messgenauigkeit, weitem Messbereich und hoher Messrate.

Das erfindungsgemässe Absolut-Distanzmessverfahren bzw. die erfindungsgemässe Absolut-Distanzmessvorrichtung werden nachfolgend anhand von in der Zeichnung schematisch dargestellten Ausführungsbeispielen rein beispielhaft näher beschrieben oder erläutert. Im einzelnen zeigen

Fig.1    eine schematische Darstellung des prinzipiellen Messaufbaus;

Fig.2    die schematische Darstellung der Bildung des heterodynen Mischprodukts zwischen emittiertem und vom Ziel reflektiertem Lichtsignal;

Fig.3    die Darstellung der Phase eines durch einen Quadraturempfänger aufgenommenen Interferogramms;

Fig.4    die Darstellung des Frequenzverlaufs eines monofrequenten Signals mit zeitlichem Integrationsfenster;

Fig.5    die Darstellung des Frequenzverlaufs des virtuellen Interferogramms;

Fig.6    die schematische Darstellung einer ersten Ausführungsform des Referenzelements;

Fig.7    die schematische Darstellung einer zweiten Ausführungsform des Referenzelements;

Fig.8    die Darstellung des Absorptionsspektrums von Acetylen;

Fig.9    die Darstellung eines Ausschnittes des Absorptionsspektrums von Acetylen und

Fig.10    die schematische Darstellung eines kompletten faseroptischen Aufbaus von Mess- und Referenzinterferometer inklusive eines Referenzelements zur Kalibrierung der Referenzlänge.

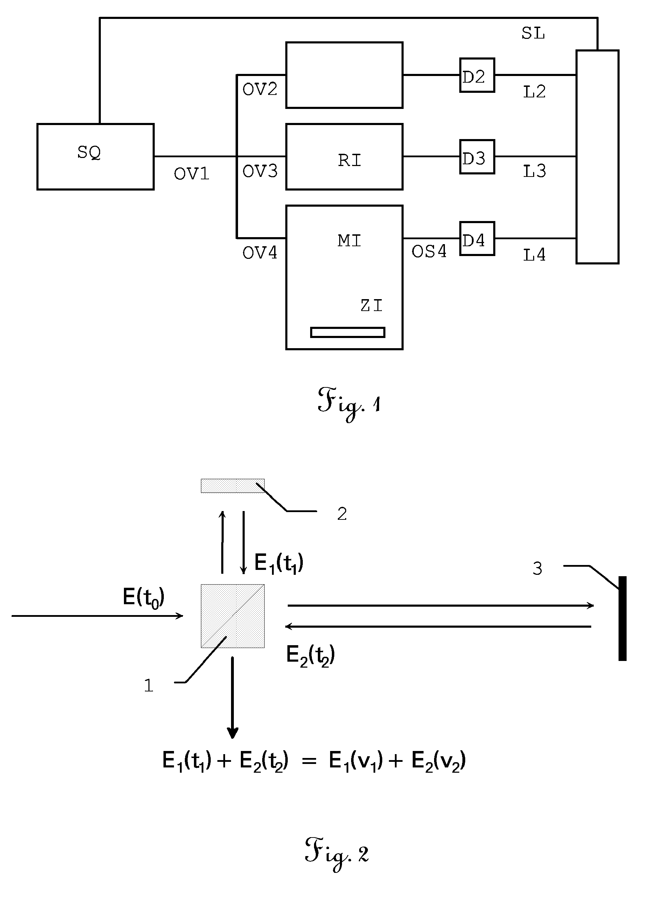

Fig.1 stellt den prinzipiellen Messaufbau dar. Die Signalquelle SQ wird über die optischen Verbindungen OV1-OV4 in das Messinterferometer MI, das Referenzinterferometer RI und die optionale Kalibrierungseinheit KE eingekoppelt. Das zu vermessende Ziel ZI ist während der Messung Bestandteil des Messinterferometers. Über die optischen Strecken OS2, OS3 und OS4 werden die Signale an die Detektoreinheiten D2, D3 und D4 weitergeleitet. Detektorsignale werden über elektrische Leitungen L2, L3 und L4 zum Signalprozessor SP geführt. Der Signalprozessor SP übernimmt die Verarbeitung und Auswertung der Signale und steuert zudem über die Steuerleitung SL die Signalquelle SQ.

Fig.2 zeigt die schematische Darstellung eines Interferometers zur Bildung des heterodynen Mischprodukts. Ein Teil des emittierten Lichts wird vom Strahlteiler 1 ausgekoppelt und nach Reflexion an Reflektor 2 und Durchgang durch den Strahlteiler mit dem von Reflektor 3 rückgestreuten Lichtsignals überlagert. Für interferometrische Absolutdistanzmessungen werden durchstimmbare Laserquellen verwendet. In der prinzipiell einfachsten Ausführungsform, genügt deren zeitabhängige Emission der Gleichung $v(t)=v_0 + \gamma t$. Die Überlagerung der beiden durch die zurückgelegten Strecken verzögerten E-Felder erzeugt eine heterodyne Frequenz $f$.

$$f = v(t_2) - v(t_1) = \left(v_0 + \gamma\, t_2\right) - \left(v_0 + \gamma\, t_1\right)$$
$$mit\ t_1 = 2\, L_1\, /\, c\ \ und\ \ t_2 = 2\, L_2\, /\, c$$

$$f = \frac{\gamma\, 2R}{c}$$

und $R = L_2 - L_1$ (*Differenz der Strecken*)

Diese grundlegende Beziehung verbindet die zu messende Distanz mit dem Trägersignal der heterodynen Frequenz $f$.

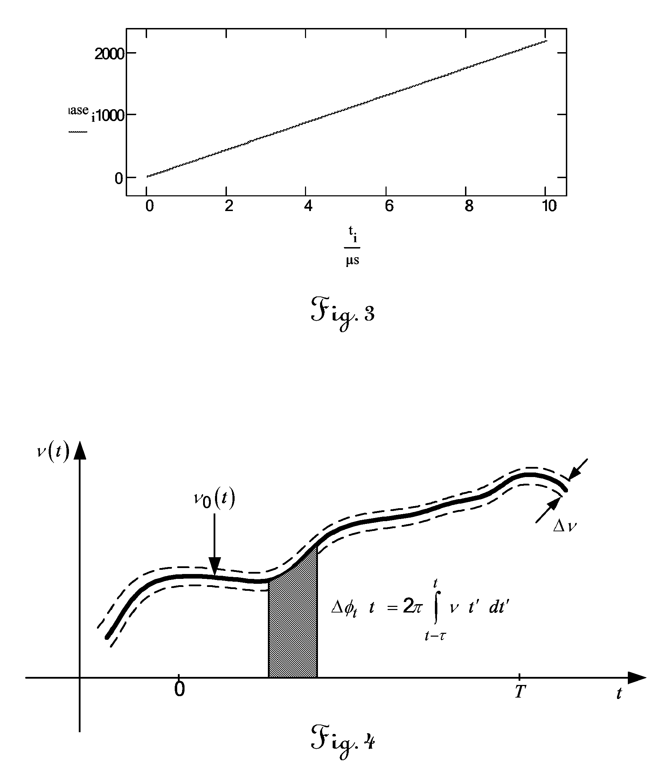

In Fig.3 erfolgt die Darstellung der Phase eines durch einen Quadraturempfänger aufgenommenen Interferogramms. Für ein Beispiel mit $\gamma$ = 40 *GHz/ms und L* = 40*m* folgt $f$ = 10.7 *MHz* als Heterodynfrequenz der Messung. Auf dem Detektor beträgt die Intensität der empfangenen Signale

$$I = (E_1 + E_2) \cdot (E_1 + E_2)^{*}$$

$$I = E_1^{\,2} + E_2^{\,2} + 2E_1 E_2 \cdot \cos(2\pi f t) \quad .$$

Diese empfangene Intensität stellt die Basis der Signalverarbeitung dar. Im Falle eines ungestörten Signals kann durch eine Fourier-Zerlegung direkt die Trägerfrequenz erhalten werden, so dass die zu ermittelnde Distanz direkt berechnet werden kann. In Wirklichkeit sind die Signale jedoch gestört, so dass es Vorteile bietet, die Phase $\phi$ der oszillierenden Intensität direkt durch einen optischen Quadraturempfänger zu messen. Bei einer perfekten Messung gilt der lineare Verlauf

$$\frac{\Delta\phi}{\Delta t} = f$$

Die Phase steigt somit in Zeitabhängigkeit - wie in Fig. 3 dargestellt - linear an.

Fig.4 stellt den Frequenzverlauf eines monofrequenten Signals dar. Ausserdem ist ein zeitliches Integrationsfenster gemäss Gleichungen (1) und (3) abgebildet. Ein Interferometer erfasst die Phasenveränderung zwischen emittiertem Signal e(t) und dem nach einem Lauf über eine Strecke wieder empfangenen Signal *r(t)*. Um die Messung der Phasenveränderung zu definieren, wird ein monofrequentes oder aus mehreren monofrequenten Anteilen zusammengesetztes Signal verwendet. Dies bedeutet, dass eine Charakterisierung anhand der Signalamplitude E(t) und der augenblicklichen Frequenz v(t) erfolgen kann, wobei diese bezüglich des Meßvorgangs vergleichsweise langsam variieren:

$$e(t) = E(t) \cdot \cos\phi(t)$$

$$\frac{\phi(t)}{2\pi} = \int_0^t v(t')\,dt' + \frac{\phi_0}{2\pi}$$

Hierbei bedeuten
*e(t)* das emittierte Signal
*E(t)* die Signalamplitude
$\phi(t)$ die Phase des emittierten Signals [rad]
$\phi_0$ den Phasenversatz [rad]
*v(t)* die augenblickliche Frequenz des emittierten Signals [Hz]

Fig.4 zeigt ein Beispiel für den zeitabhängigen Verlauf der augenblicklichen Frequenz v(*t*). Im Idealfall stellt das empfangene Signal r(t) eine verzögerte und geschwächte Kopie des emittierten Signals e(t) dar, wobei die Verzögerung und Schwächung durch die Terme $\tau(t)$ und $G(t)$ berücksichtigt werden:

$$r(t) = \sqrt{G(t)} \cdot e\big(t - \tau(t)\big) \approx \sqrt{G(t)} \cdot E(t) \cdot \cos\phi\big(t - \tau(t)\big)$$

Die Ermittlung der Zieldistanz erfolgt über die Messung der Phasenveränderung pro Umlauf vom Distanzmesser zum Ziel und zurück und damit der Phasenänderung zwischen r(t) und e(t):

$$\Delta\phi(t) = \phi(t) - \phi\big(t - \tau(t)\big)$$

Unter der oben getroffenen Annahme nur langsamer Variationen und unter Vernachlässigung möglicher Geschwindigkeitskomponenten folgt

$$\frac{\Delta\phi(t)}{2\pi} = \int\limits_{t-\tau(t)}^{t} \nu(t')dt'$$

$$\overset{\tau(t)<<\nu(t)/\dot{\nu}(t)}{\approx} \nu(t) \cdot \tau(t)$$

Diese Annahme $\tau(t) << \nu(t) / \dot{\nu}(t)$ gilt jedoch nur für die langsame Veränderung der Frequenz, wie sie beispielsweise durch die Nichtlinearität des Frequenzverlaufs verursacht werden kann. Für hochfrequente Rauschanteile genügt diese Annahme nicht.

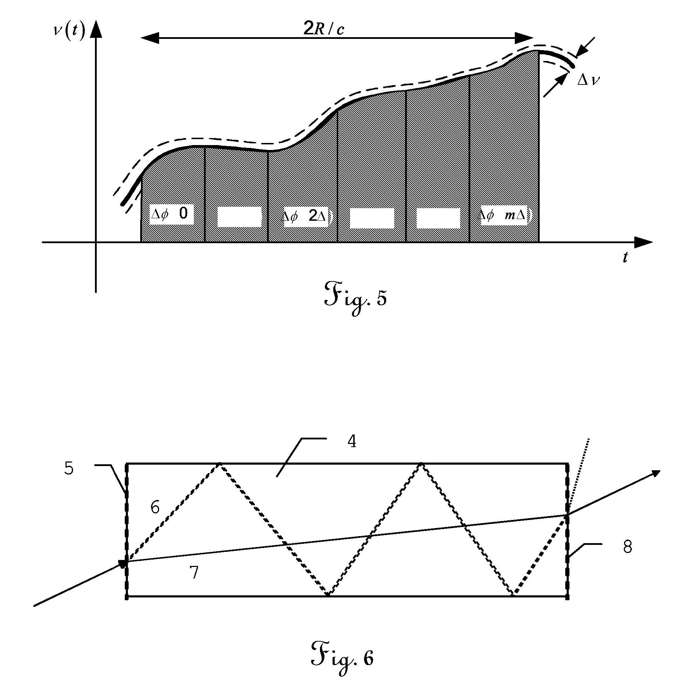

Fig.5 zeigt die Darstellung des Frequenzverlaufs des virtuellen Interferogramms. Erfindungsgemäss werden aus der Messung der Phasenverlaufsdaten des Referenzinterferometers mit einer kurzen Länge die äquivalenten Messdaten einer der Messstrecke entsprechenden Länge synthetisch erzeugt. In der einfachsten Ausführungsform wird hierzu

$$\Delta\phi_{m\cdot r}\big(t_k\big) = \alpha \cdot \sum_{j=k-m+1}^{k} \Delta\phi_r\big(t_j\big)$$

als Summe der einzelnen Phasenintervalle der Referenzmessung gebildet, wobei $R \approx m \cdot \alpha \cdot R_r$. Ein Beispiel für die Zusammensetzung der Phasen eines solches virtuelles Interferogramm zeigt der Frequenzverlauf in Fig. 5.

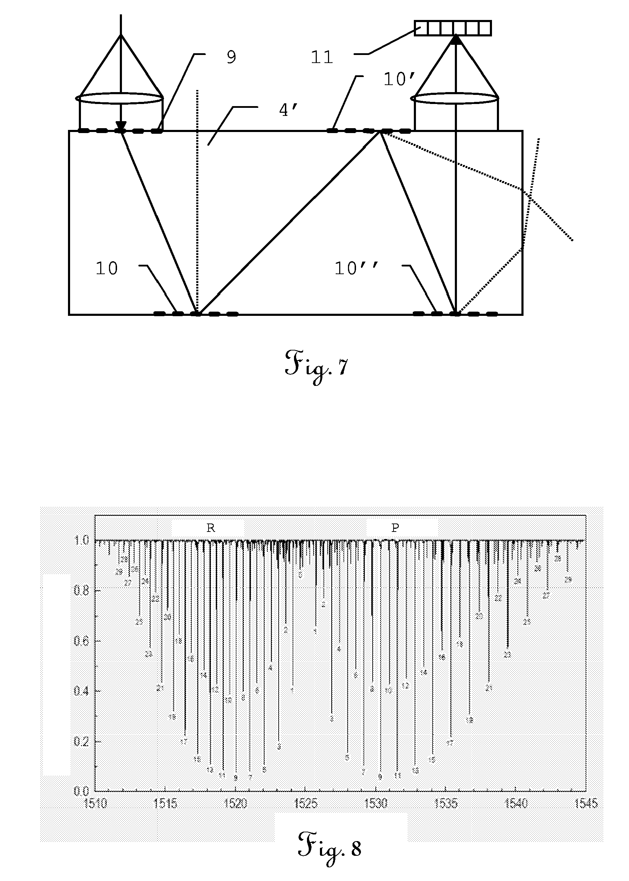

In Fig.6 wird eine erste Ausführungsform des Referenzelements zur Bestimmung der Referenzlänge schematisch dargestellt. Das Interferometer wird vollständig in einen Zerodur-Block 4 integriert. Auf dem Eintrittsfenster ist ein erstes Gitter 5 angebracht, welches durch ein weiteres Gitter 8 auf der Austrittsseite ergänzt werden kann. Der einfallende Strahl wird in zwei Strahlgänge aufgespalten, die Extrema nullter und erster Ordnung entsprechen. Der erste Strahlgang 7 nullter Ordnung propagiert direkt durch den Zerodur-Block 4, wohingegen der zweite Strahlgang 6 erster Ordnung mehrere (Total-)Reflektionen an den Grenzflächen des Zerodur-Blocks 4 aufweist. Durch eine exakte Dimensionierung kann der Überlapp der beiden gegeneinander phasenverschobenen Strahlgänge am Austrittsfenster erreicht werden. Die Wegdifferenz der Strahlgänge liefert bei der Überlagerung nach dem Austritt ein heterodynes Signal mit bekannter Frequenz aus der Massverkörperung des Zerodur-Blocks. Die Strahlung kann durch einen Detektor aufgenommen und weiterverarbeitet werden. Durch das Zerodur-Material kann eine grosse Unabhängigkeit von Temperatureinflüssen erreicht werden. Aufgrund der Gitter, die beispielsweise lithographisch aufgebracht werden können, ist eine Strahlführung ausschliesslich im kompakten und temperaturstabilen Zerodur-Block 4 realisierbar. Neben der zweidimensionalen Trennung kann auch eine dreidimensionale Aufteilung mit Ausbreitungsrichtungen und Strahlgängen in drei Achsen realisiert werden.

Fig.7 veranschaulicht schematisch eine zweite Ausführungsform des Referenzelements mit einem Photodetektor, auf den ein Strahlgang mit mehrfacher Beugung geführt wird. Dieses Referenzelements ist vor allem für schmale Wellenlängenbereiche geeignet. Die Basis der Realisierung stellt wiederum ein Zerodur-Block 4' dar, an oder in dessen Oberfläche sich ein erstes Gitter 9 und ggf. weitere Gitter 10, 10', 10'' befinden. In dieser Ausführungsform ist der Winkel der Strahlführung die sensitive Information. In der gezeigten Anordnung liegt der Beugungswinkel bei 1 $\mu$m Wellenlänge in Zerodur bei 22.5°, was mit einer Gitterperiode von ca. 4.2 $\mu$m korrespondiert. Die benötigte Auflösung (1 ppm) bestimmt die Breite des ausgeleuchteten Gitterabschnittes. Nach den hier exemplarisch dargestellten vier Beugungen wird das Bild auf die Detektoranordnung geführt. Der Detektor wird mit ca. 100 MHz ausgelesen. Dabei repräsentiert jeder Messpunkt eine Momentaufnahme der Wellenlänge bei der Durchstimmung des Lasers.

Fig.8 - Fig.9 erläutern die Darstellung einer Gaszelle als dritter Ausführungsform des Referenzelements. Diese Ausführungsform nutzt eine natürliche Wellenlängenreferenz, die durch die Absorption in einem Medium definiert wird, vergleichbar mit der Stabilisierung in einem HeNe-Laser. Beispielsweise können hierfür Acetylen-Gaszellen verwendet werden, die als Komponenten im Handel erhältlich sind. Dabei liegt der Einsatzbereich bei 1540 nm mit Linienbreiten von 0.1 pm. Im Fall eines Durchstimmens über 1 nm (120 GHz)können 2-3 Übergänge hoher Genauigkeit genutzt werden, so dass eine sehr präzise Bestimmung der Laserwellenlänge und damit Kalibrierung des ReferenzInterferometers erfolgen kann. Aufgrund der atomaren Natur der Übergänge können temperaturabhängige Einflüsse vernachlässigt werden.

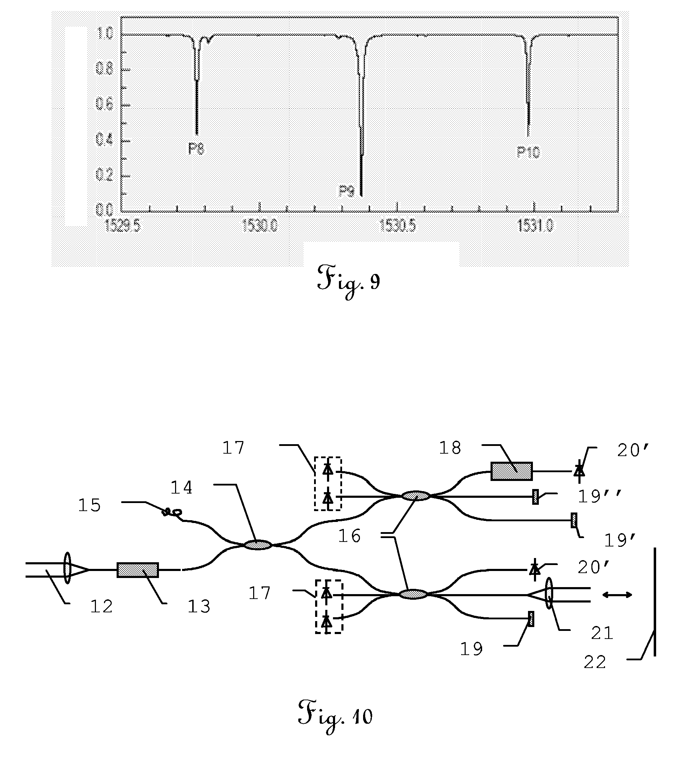

Im Einzelnen zeigt Fig.8 die Darstellung des Absorptionsspektrums von Acetylen und Fig.9 die Darstellung eines Ausschnittes des Absorptionsspektrums von Acetylen.

In Fig.10 wird die Nutzung einer Gaszelle dritter Ausführungsform des Referenzelements innerhalb eines kompletten faseroptischen Aufbaus veranschaulicht. Licht der Laserquelle 12 wird durch einen optischen Isolator 13 geführt, um externe Rückkopplungen zu vermeiden. Nach dem Isolator 13 wird das Licht in einem ersten Strahlteiler 14 asymmetrisch (10dB-Koppler) in zwei Interferometer eingekoppelt, wobei ein Ausgang in einem Abschlussstück 15 endet. Beide Interferometer weisen wiederum je einen 3X3-Koppler 16 auf, die eine Phasenverschiebung zwischen den zwei Detektoren bewirken, die jeweils einen der beiden zugeordneten Quadraturempfänger 17 bilden. In einem der beiden Interferometer ist die Gas-Zelle 18 angeordnet. Faraday-Spiegel 19-19'' in den beiden Referenz-Interferometern erzeugen hierbei eine orthogonal polarisierte reflektierte Welle mit 100% Modulationstiefe bei der Überlagerung. Durch die Ausführung mittels Fasern wird ein guter Überlapp der Strahlung ohne Ausrichtungs- bzw. Justiererfordernisse erreicht. Die Singlemode-Charakteristik erlaubt die Emission ebener Wellenfronten über eine Sendeoptik 21 zur Vermessung eines Zieles 22. Zwei Photodioden 20' dienen zum Monitoring.

**Patentansprüche**

1. Absolut-Distanzmessverfahren mit den Schritten

   • <u>Aussenden</u> gechirpter elektromagnetischer Strahlung, insbesondere Laserlicht,

   o auf wenigstens ein zu vermessendes Ziel und
   o über wenigstens eine Referenzlänge,

   • <u>Empfangen</u> der vom Ziel zurückgestreuten und der über die Referenzlänge geführten Strahlung,
   • <u>Umwandeln</u> der empfangenen Strahlung in Signale, insbesondere unter interferometrischem Mischen,
   • <u>Bestimmen</u> wenigstens einer Distanz zu dem wenigstens einen Ziel aus den Signalen,

   **dadurch gekennzeichnet, dass**
   beim Empfangen ein digitalisiertes erstes Interferogramm der vom Ziel zurückgestreuten Strahlung und ein digitalisiertes zweites Interferogramm der über die Referenzlänge geführten Strahlung aufgenommen werden.

2. Absolut-Distanzmessverfahren nach Anspruch 1,
   **dadurch gekennzeichnet, dass**
   beim Bestimmen der wenigstens einen Distanz eine Kalibration unter Verwendung der Referenzlänge erfolgt.

3. Absolut-Distanzmessverfahren nach Anspruch 1 oder 2,
   **dadurch gekennzeichnet, dass**
   die Referenzlänge in einem bekannten Verhältnis zum Abtastintervall des ersten digitalisierten Interferogramms steht, insbesondere das Abtastintervall der Verzögerungszeit $\tau_r$ der Referenzlänge $R_r$ gemäss $R_r = c \cdot \tau_r / 2$ entspricht, wobei c die Lichtgeschwindigkeit bezeichnet.

4. Absolut-Distanzmessverfahren nach einem der vorangehenden Ansprüche,
   **dadurch gekennzeichnet, dass**
   aus dem ersten Interferogramm und/oder dem zweiten Interferogramm eine mit der zu messenden Distanz verknüpfte Phaseninformation extrahiert wird.

5. Absolut-Distanzmessverfahren nach einem der vorangehenden Ansprüche,
**dadurch gekennzeichnet, dass**
aus Phasenverlaufsdaten des zweiten Interferogramms ein mit dem ersten Interferogramm hochkorreliertes virtuelles Interferogramm oder der Phasenverlauf $\Delta\phi_{m\cdot r}(t_k)$ des virtuellen Interferogramms synthetisiert wird.

6. Absolut-Distanzmessverfahren nach Anspruch 5,
**dadurch gekennzeichnet, dass**
der Phasenverlauf des virtuellen Interferogramms gemäss

$$\bullet \quad \Delta\phi_{m\cdot r}\left(t_k\right)=\alpha\cdot\sum_{j=k-m+1}^{k}\Delta\phi_r\left(t_j\right)$$

oder

$$\bullet \quad \Delta\phi_{m\cdot r}\left(t_k\right)=\alpha\cdot\left[\sum_{j=k-m+1}^{k}\Delta\phi_r\left(t_j\right)+\frac{R-m\cdot\alpha\cdot R_r}{\alpha\cdot R_r}\Delta\phi_r\left(t_{k-m}\right)\right]$$

gebildet wird,
wobei
$R_r$ die Referenzlänge,
$m\in N$ den ganzzahligen Anteil des Verhältnisses zwischen Referenzlänge und Messdistanz gemäss $R\approx m\cdot\alpha\cdot R_r$,

derart dass $(m\text{-}1)\cdot\alpha\cdot R_r\leq R\leq m\cdot\alpha\cdot R_r$ gilt, $\Delta\phi_r(t_k)=2\pi\cdot\displaystyle\int_{t_k-\tau_r}^{t_k}\nu(t)^{dt}$ den Phasenverlauf des zweiten Interferogramms, und

$\alpha\approx 1$ ein die Abweichung zwischen Abtastintervall und Verzögerungszeit der Referenzlänge modellierender Korrekturfaktor bezeichnen.

7. Absolut-Distanzmessverfahren nach Anspruch 5,
**dadurch gekennzeichnet, dass**
das virtuelle Interferogramm oder der Phasenverlauf $\Delta\phi_{m\cdot r}(t_k)$ des virtuellen Interferogramms polynomial interpoliert wird.

8. Absolut-Distanzmessverfahren nach einem der Ansprüche 5 bis 7,
**dadurch gekennzeichnet, dass**
das Bestimmen der Distanz durch eine Optimierung auf

• Phasenverlaufsdaten des Interferogramms ersten und
• Phasenverlaufsdaten des virtuellen Interferogramms

erfolgt, insbesondere unter Verwendung der Beziehung

$$\min_{\tilde{R},\tilde{m}}\left[\frac{\tilde{R}}{\tilde{m}\cdot\alpha\cdot R_r}\Delta\phi_{m\cdot r}\left(t\right)-\Delta\phi_M\left(t\right)\right]^2$$

wobei $\Delta\phi_M\left(t_k\right)=2\pi\cdot\int_{t_k-\tau_m}^{t_k} v\left(t\right)dt$ den Phasenverlauf des ersten

Interferogramms,

$\Delta\phi_{m\cdot r}(t_k)=\alpha\cdot\sum_{j=k-m+1}^{k}\Delta\phi_r(t_j)$ den Phasenverlauf des virtuellen

Interferogramms mit $\Delta\phi_r(t_k)=2\pi\cdot\int_{t_k-\tau_r}^{t_k} v(t)dt$ als Phasenverlauf des zweiten Interferogramms, v(t) den gegebenen Frequenzverlauf der emittierten Strahlung,
$R_r$ die Referenzlänge,
$R$ die zu bestimmende Distanz,
$m \in N$ den ganzzahligen Anteil des Verhältnisses zwischen Referenzlänge und Messdistanz gemäss $R\approx m\cdot\alpha\cdot R_r$, korrigiert mit einem die Abweichung zwischen Abtastintervall und Verzögerungszeit der Referenzlänge modellierenden Korrekturfaktor $\alpha\approx1$, bezeichnen.

9. Absolut-Distanzmessverfahren nach einem der Ansprüche 5 bis 7,
   **dadurch gekennzeichnet, dass**
   das Bestimmen der Distanz durch eine Optimierung auf den gemessenen Signalamplituden des ersten Interferogramms erfolgt, insbesondere unter Verwendung der Beziehung

$$\min_{\tilde{A},\tilde{R},\tilde{m}}\left[\tilde{A}\cdot\gamma\left(t\right)\cdot\cos\left(\frac{\tilde{R}}{\tilde{m}\cdot\alpha\cdot R_r}\Delta\phi_{m\cdot r}\left(t\right)\right)-s\left(t\right)\right]^2$$

wobei
$s(t)$ die Signalamplitude des ersten Interferogramms,
$\tilde{A}$ die geschätzte Signalstärke des ersten Interferogramms,
$\gamma(t)$ eine optionale Messung des zeitlichen Intensitätsverlaufs des emittierten Laserlichts, welche bei bekanntermassen konstanter Ausgangsleistung zu $\gamma(t)=1$ gesetzt werden kann, $\Delta\phi_{m\cdot r}(t_k)=\alpha\cdot\sum_{j=k-m+1}^{k}\Delta\phi_r(t_j)$ den Phasenverlauf des virtuellen Interferogramms mit $\Delta\phi_r(t_k)=2\pi\cdot\int_{t_k-\tau_r}^{t_k} v(t)dt$ als Phasenverlauf des zweiten Interferogramms,

v(t) den gegebenen Frequenzverlauf der emittierten Strahlung,
$R_r$ die Referenzlänge,
$R$ die zu bestimmende Distanz,
$m \in N$ den ganzzahligen Anteil des Verhältnisses zwischen Referenzlänge und Distanz gemäss $R\approx m\cdot\alpha\cdot R_r$, korrigiert mit einem die Abweichung zwischen Abtastintervall und Verzögerungszeit der Referenzlänge modellierenden Korrekturfaktor $\alpha\approx1$, bezeichnen.

10. Absolut-Distanzmessverfahren nach einem der Ansprüche 5 bis 7,
    **dadurch gekennzeichnet, dass**
    das Bestimmen der Distanz bei Bewegung des Messobjektes durch eine Optimierung auf

    • Phasenverlaufsdaten des ersten Interferogramms und
    • Phasenverlaufsdaten des ersten des virtuellen Interferogramms erfolgt,

insbesondere bei stark verrauschtem Signal des Messinterferometers unter Verwendung der Beziehung

$$\bullet \quad \min_{\tilde{R},\tilde{\theta},\tilde{m}} \left[ \frac{\tilde{R}}{\tilde{m} \cdot \alpha \cdot R_r} \Delta\phi_{m \cdot r}(t) - \Delta\phi_M(t) + 2\pi \frac{V(t;\tilde{\theta}) \cdot t}{\lambda} \right]^2$$

oder

$$\bullet \quad \min_{\tilde{A},\tilde{R},\tilde{\theta},\tilde{m}} \left[ \tilde{A} \cdot \cos\left( \frac{\tilde{R}}{\tilde{m} \cdot \alpha \cdot R_r} \Delta\phi_{m \cdot r}(t) + 2\pi \frac{V(t;\tilde{\theta}) \cdot t}{\lambda} \right) - s(t) \right]^2,$$

wobei

$$\Delta\phi_M(t_k) = 2\pi \cdot \left[ \int_{t_k - \tau_m}^{t_k} \nu(t)\,dt + \frac{V \cdot t}{\lambda} \right]$$

den Phasenverlauf des ersten Interferogramms, $\Delta\phi_{m \cdot r}(t_k)$

den Phasenverlauf des virtuellen Interferogramms mit $\Delta\phi_r(t_k) = 2\pi \cdot \int_{t_k - \tau_r}^{t_k} \nu(t)\,dt$ als Phasenverlauf des zweiten Interferogramms,
$s(t)$ die Signalamplitude des ersten Interferogramms,
$\tilde{A}$ die geschätzte Signalstärke des ersten Interferogramms,
$\nu(t)$ den gegebenen Frequenzverlauf der emittierten Strahlung,
$R_r$ die Referenzlänge,
$R$ die zu bestimmende Distanz,
$V(t,\theta)$ ein Bewegungsmodell des zu vermessenden Ziels mit den Geschwindigkeitsparametern $\theta$,
$m \in N$ den ganzzahligen Anteil des Verhältnisses zwischen Referenzlänge und Messdistanz gemäss
$R \approx m \cdot \alpha \cdot R_r$ korrigiert mit einem die Abweichung zwischen Abtastintervall und Verzögerungszeit der Referenzlänge modellierenden Korrekturfaktor $\alpha \approx 1$, bezeichnen.

11. Absolut-Distanzmessverfahren nach einem der Ansprüche 8 bis 10,
**dadurch gekennzeichnet, dass**
die Optimierung approximativ erfolgt, insbesondere durch

    • ein vereinfachtes Bewegungsmodell konstanter Geschwindigkeit $\theta = \nu$, mit $V(t,\theta) = \nu$,
    • ein sequentielles Bestimmen des ganzzahligen Verhältnisses $m$ und der zu bestimmenden Distanz $R$,
    • ein Verzichten auf die Bestimmung der zeitlichen Variation des emittierten Laserlichts $\gamma(t)$,
    • ein Optimieren auf den Differenzphasen $\Delta\phi_M(t_k) - \Delta\phi_M(t_{k-1})$ und $\Delta\phi_{m \cdot r}(t_k) - \Delta\phi_{m \cdot r}(t_{k-1})$ statt einer Optimierung auf den Phasenverlaufsdaten.

12. Absolut-Distanzmessverfahren nach einem der vorangehenden Ansprüche,
**dadurch gekennzeichnet, dass**
eine Kalibrierung der Referenzlänge erfolgt, insbesondere mittels eines temperaturstabilen oder temperaturstabilisierten Referenzelements.

13. Computerprogrammprodukt mit Programmcode, der auf einem maschinenlesbaren Träger gespeichert oder durch eine elektromagnetische Welle verkörpert ist, zur Durchführung des Verfahrens nach einem der Ansprüche 1 bis 12, insbesondere wenn das Programm in einem Computer ausgeführt wird.

**14.** Absolut-Distanzmessvorrichtung zur Durchführung des Verfahrens nach einem der Ansprüche 1 bis 12 mit wenigstens

- einer modulierbaren Strahlungsquelle (SQ) zur Erzeugung und zur Emission von Strahlung, insbesondere einer durchstimmbaren Laserquelle, auf ein zu vermessendes Ziel (ZI),
- einer Referenzlänge (RI),
- einem Signalgenerator zur Modulation der Strahlungsquelle,
- einem Detektor (D2,D3,D4) zum Empfang und zur Umwandlung des Interferogramms der rückgestreuten Strahlung in Signale,
- einem Signal-Prozessor (SP), insbesondere einem digitalen Signal-Prozessor, FPGA oder ASIC, zur Verarbeitung der Signale,
- insbesondere mit einem Mischer, vorzugsweise einem Quadraturempfänger, zur Durchführung eines heterodynen Mischverfahrens,

**dadurch gekennzeichnet, dass**
Detektor (D2,D3,D4) und Signal-Prozessor (SP) so angeordnet und ausgelegt sind, dass ein erstes digitalisiertes Interferogramm von vom Ziel (ZI) zurückgestreuten Strahlung und ein zweites Interferogramm von über die Referenzlänge (RI) geführter Strahlung aufnehmbar ist.

**15.** Absolut-Distanzmessvorrichtung nach Anspruch 14,
**gekennzeichnet durch**
ein temperaturstabiles oder temperaturstabilisiertes Referenzelement zur Kalibrierung der Referenzlänge.

**16.** Absolut-Distanzmessvorrichtung nach Anspruch 15,
**dadurch gekennzeichnet, dass**
das Referenzelement eine Gas-Zelle (18) ist, insbesondere mit Acetylen-Füllung.

**17.** Absolut-Distanzmessvorrichtung nach Anspruch 15,
**dadurch gekennzeichnet, dass** das Referenzelement ein temperaturstabilisiertes Etalon ist.

**18.** Absolut-Distanzmessvorrichtung nach Anspruch 15,
**dadurch gekennzeichnet, dass**
das Referenzelement ein Zerodur-Block (4) mit einem ersten Gitter (5) an der Eintrittsfläche zur diffraktiven Trennung eines eingehenden Strahls und einem zweiten Gitter (8) an der Austrittsfläche zur Zusammenführung der getrennten Strahlgänge mit einer Wegdifferenz der Strahlgänge, die zu einem heterodynen Signal definierter Periode führt.

**19.** Absolut-Distanzmessvorrichtung nach Anspruch 15,
**dadurch gekennzeichnet, dass**
das Referenzelement ein Zerodur-Block (4') ist, mit wenigstens einem Gitter (9) zur diffraktiven, wellenlängenabhängigen Strahlführung auf eine Detektoranordnung, welche die Bestimmung der Wellenlänge der Signalquelle erlaubt.

*Fig. 1*

$$E_1(t_1) + E_2(t_2) = E_1(v_1) + E_2(v_2)$$

*Fig. 2*

Fig. 3

$$\Delta\phi_t\ t\ =2\pi\int_{t-\tau}^{t}v\ t'\ dt'$$

Fig. 4

$$v(t)$$

$$2R/c$$

$$\Delta v$$

$$\Delta \phi \quad 0$$

$$\Delta \phi \quad 2\Delta$$

$$\Delta \phi \quad m\Delta$$

$$t$$

Fig. 5

Fig. 6

Fig. 7

Fig. 8

Fig. 9

Fig. 10

**Europäisches
Patentamt**

# EUROPÄISCHER RECHERCHENBERICHT

Nummer der Anmeldung

EP 05 10 1373

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 5 371 587 A (DE GROOT ET AL) 6. Dezember 1994 (1994-12-06) * Zusammenfassung; Abbildungen 1-3 * * Spalte 4, Zeile 29 - Spalte 5, Zeile 5 * * Spalte 5, Zeile 52 - Spalte 6, Zeile 46 * * Spalte 7, Zeilen 9-26 * * Spalte 7, Zeile 65 - Spalte 9, Zeile 25 * | 1-4, 12-14 | G01B9/02 |
| Y | | 12,15-17 | |
| Y | EP 0 260 894 A (COGENT LTD) 23. März 1988 (1988-03-23) * Zusammenfassung; Abbildung 1a * * Seite 4, Zeile 22 - Zeile 41 * | 12,15-17 | |
| A | EP 0 646 767 A (RENISHAW PLC) 5. April 1995 (1995-04-05) * Zusammenfassung; Abbildungen 1,2 * * Spalte 2 - Spalte 4 * | 1,13 | |
| A,D | US 2003/107743 A1 (VAN WIGGEREN GREGORY D) 12. Juni 2003 (2003-06-12) * Zusammenfassung; Abbildung 2 * | 1,13 | RECHERCHIERTE SACHGEBIETE (Int.Cl.7) G01B G01S |
| A,D | DE 195 22 262 A1 (CARL ZEISS JENA GMBH, 07745 JENA, DE) 9. Januar 1997 (1997-01-09) * Zusammenfassung; Abbildung 1 * | 1,13 | |

-/--

Der vorliegende Recherchenbericht wurde für alle Patentansprüche erstellt

| Recherchenort | Abschlußdatum der Recherche | Prüfer |
|---|---|---|
| Berlin | 30. August 2005 | Vorropoulos, G |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes
    Dokument

EPO FORM 1503 03.82 (P04C03)

**Europäisches Patentamt**

# EUROPÄISCHER RECHERCHENBERICHT

Nummer der Anmeldung

EP 05 10 1373

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | WO 98/38475 A (ABERLINK TECHNOLOGY LIMITED; STEPHENS, NOEL, WILLIAM, FRANK) 3. September 1998 (1998-09-03) * Zusammenfassung; Abbildungen 1,4,5,8,11 * * Seite 4 * * Seite 6 * * Seite 8 - Seite 11 * * Seite 13 * | 15-17 | |
| A | US 2004/130728 A1 (DEGERTEKIN FAHRETTIN LEVENT ET AL) 8. Juli 2004 (2004-07-08) * Zusammenfassung; Abbildungen 1,4,5 * * Absatz '0025! - Absatz '0031! * * Absatz '0039! - Absatz '0069! * | 18,19 | |
| A | US 2003/095261 A1 (GU SHIJIE) 22. Mai 2003 (2003-05-22) * Zusammenfassung; Abbildungen 1-5 * * Absatz '0003! - Absatz '0012! * * Absatz '0030! - Absatz '0041! * | 18,19 | RECHERCHIERTE SACHGEBIETE (Int.Cl.7) |

Der vorliegende Recherchenbericht wurde für alle Patentansprüche erstellt

| Recherchenort | Abschlußdatum der Recherche | Prüfer |
|---|---|---|
| Berlin | 30. August 2005 | Vorropoulos, G |

**Europäisches**
**Patentamt**

Nummer der Anmeldung

EP 05 10 1373

## GEBÜHRENPFLICHTIGE PATENTANSPRÜCHE

Die vorliegende europäische Patentanmeldung enthielt bei ihrer Einreichung mehr als zehn Patentansprüche.

☐ Nur ein Teil der Anspruchsgebühren wurde innerhalb der vorgeschriebenen Frist entrichtet. Der vor- liegende europäische Recherchenbericht wurde für die ersten zehn sowie für jene Patentansprüche erstellt, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die ersten zehn Patentansprüche erstellt.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☒ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vor- liegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

**Europäisches Patentamt**

## MANGELNDE EINHEITLICHKEIT DER ERFINDUNG ERGÄNZUNGSBLATT B

Nummer der Anmeldung

EP 05 10 1373

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-13

   Absolut-Distanzmessinterferometer mit verbesserter Phasendatenverarbeitung

   ---

2. Ansprüche: 14-19

   Kalibrierung der Referenzlänge eines Absolut-Distanzmessinterferometers

   ---

## ANHANG ZUM EUROPÄISCHEN RECHERCHENBERICHT
## ÜBER DIE EUROPÄISCHE PATENTANMELDUNG NR.

EP 05 10 1373

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-08-2005

| Im Recherchenbericht angeführtes Patentdokument | | Datum der Veröffentlichung | Mitglied(er) der Patentfamilie | | Datum der Veröffentlichung |
|---|---|---|---|---|---|
| US 5371587 | A | 06-12-1994 | KEINE | | |
| EP 0260894 | A | 23-03-1988 | EP | 0260894 A1 | 23-03-1988 |
| | | | GB | 2200986 A ,B | 17-08-1988 |
| | | | JP | 63132124 A | 04-06-1988 |
| | | | US | 4974961 A | 04-12-1990 |
| EP 0646767 | A | 05-04-1995 | DE | 69409601 D1 | 20-05-1998 |
| | | | DE | 69409601 T2 | 06-08-1998 |
| | | | EP | 0646767 A2 | 05-04-1995 |
| | | | JP | 7181007 A | 18-07-1995 |
| | | | US | 5541730 A | 30-07-1996 |
| US 2003107743 | A1 | 12-06-2003 | EP | 1324004 A2 | 02-07-2003 |
| | | | JP | 2003172604 A | 20-06-2003 |
| DE 19522262 | A1 | 09-01-1997 | GB | 2305239 A ,B | 02-04-1997 |
| | | | US | 5784161 A | 21-07-1998 |
| WO 9838475 | A | 03-09-1998 | AU | 5997098 A | 18-09-1998 |
| | | | WO | 9838475 A1 | 03-09-1998 |
| US 2004130728 | A1 | 08-07-2004 | US | 2003038949 A1 | 27-02-2003 |
| US 2003095261 | A1 | 22-05-2003 | KEINE | | |

EPO FORM P0461

Für nähere Einzelheiten zu diesem Anhang : siehe Amtsblatt des Europäischen Patentamts, Nr.12/82